# EUROPÄISCHE PATENTSCHRIFT

(11) **EP 1 710 107 B1**
(45) Veröffentlichungstag und Bekanntmachung des Hinweises auf die Patenterteilung: **30.06.2010**
(21) Anmeldenummer: 06005970.6
(22) Anmeldetag: 23.03.2006
(51) Int. Cl.: B60J 5/04

(54) **Seitentüranordnung eines Kraftfahrzeugs**
Vehicle side door arrangement
Porte latérale pour un véhicule

(30) Priorität: 06.04.2005 DE 202005005476 U
(43) Veröffentlichungstag der Anmeldung: 11.10.2006
(73) Patentinhaber: Brose Schliesssysteme GmbH & Co. KG, 42369 Wuppertal (DE)
(72) Erfinder: Frohne-Brinkmann, Norbert, 49586 Merzen (DE)
(74) Vertreter: Gesthuysen, von Rohr & Eggert

(56) Entgegenhaltungen:
- EP-A- 0 220 414
- EP-A- 1 215 064
- JP-A- 2003 278 447
- US-B2- 6 779 831

## Beschreibung

Die vorliegende Erfindung betrifft eine Seitentüranordnung eines Kraftfahrzeugs gemäß dem Oberbegriff des Anspruchs 1 sowie eine Kraftfahrzeugschloßanordnung für die hintere Seitentür einer derartigen Seitentüranordnung gemäß dem Oberbegriff von Anspruch 11.

In allen Bereichen eines Kraftfahrzeugs kommt der Steigerung des Benutzungskomforts heute zunehmende Bedeutung zu. Hierzu gehört u. a. auch die Forderung nach einem bequemen Einsteigen in das Kraftfahrzeug bzw. Aussteigen aus dem Kraftfahrzeug. Diese Forderung betrifft insbesondere die Ausgestaltung der Seitentüranordnung eines Kraftfahrzeugs.

Die Mehrzahl der bekannten Kraftfahrzeuge ist mit einer A-Säule, einer B-Säule und einer C-Säule ausgestattet. Dabei stellt die B-Säule generell einen Engpaß beim Ein- bzw. Aussteigen sowohl für die vorderen Sitzplätze als auch für die hinteren Sitzplätze dar. Dies ist ein Grund dafür, daß derzeit die Nachfrage nach Kraftfahrzeugen ohne B-Säule steigt.

Ein Kraftfahrzeug ohne B-Säule zeigt die US 6,779,831 B2. Dieses Kraftfahrzeug weist eine Seitentüranordnung mit einer vorderen Seitentür und einer hinteren Seitentür auf, wobei die vordere Seitentür über ein vorderes Türscharnier an der Kraftfahrzeugkarosserie angelenkt ist und wobei die hintere Seitentür über ein hinteres Türscharnier an der Kraftfahrzeugkarosserie angelenkt ist. Die Stirnseiten der beiden Seitentüren sind einander zugewandt, wenn die beiden Seitentüren geschlossen sind. Mit "Stirnseite" ist hier grundsätzlich die dem Türscharnier gegenüberliegende Seite der Seitentür gemeint.

Der hinteren Seitentür ist eine Schloßanordnung zugeordnet, durch die die im geschlossenen Zustand befindliche hintere Seitentür an der Kraftfahrzeugkarosserie fixierbar ist. Auch der vorderen Seitentür ist eine Schloßanordnung zugeordnet, durch die die im geschlossenen Zustand befindliche vordere Seitentür an der hinteren Seitentür fixierbar ist. Durch die beschriebene Anordnung der beiden Seitentüren zueinander ersetzt die hintere Seitentür gewissermaßen die ansonsten vorhandene B-Säule. Die vordere Seitentür ist der hinteren Seitentür "nachgeschaltet". Dadurch muß unter allen Umständen vermieden werden, daß die Fixierung der hinteren Seitentür vor der Fixierung der vorderen Seitentür gelöst wird. Dies wird bei der oben beschriebenen Seitentüranordnung dadurch bewerkstelligt, daß die Betätigung der hinteren Seitentür durch die im geschlossenen Zustand befindliche vordere Seitentür blockiert wird.

Für die Betätigung der hinteren Seitentür ist ein Türinnengriff vorgesehen, durch dessen Betätigung die Fixierung der hinteren Seitentür lösbar ist. Die im geschlossenen Zustand befindliche vordere Seitentür befindet sich derart im Bewegungsbereich dieses Türinnengriffs, daß eine Betätigung erst dann möglich ist, wenn die vordere Seitentür bereits geöffnet wurde.

Um die obige Blockierung des Türinnengriffs der hinteren Seitentür zu realisieren, ist es bei der oben beschriebenen Seitentüranordnung notwendig, den Türinnengriff in unmittelbarer Nähe der Stirnseite der hinteren Seitentür anzuordnen. Nachteilig ist bei einer derartigen Anordnung die Tatsache, daß eine erhebliche Einklemmgefahr für den Benutzer entsteht. Ferner ist die Gestaltungsfreiheit bei der Konstruktion und beim Design des Türinnengriffs stark eingeschränkt.

Die ebenfalls bekannte Seitentüranordnung eines Kraftfahrzeugs (EP 1 215 064 A1), von der die vorliegende Erfindung ausgeht, beseitigt den obigen Nachteil dadurch, daß die Schloßanordnung eine elektrisch betätigbare Kupplung aufweist und daß der Türinnengriff hierdurch mit der Schloßanordnung kuppelbar ist. Dies wird im folgenden als "Aktivierung" des Türinnengriffs bezeichnet. Zur Ermittlung, ob sich die vordere Seitentür in der geöffneten Stellung oder in der geschlossenen Stellung befindet, ist eine elektrische Einrichtung wie ein Sensor o. dgl. vorgesehen. In Abhängigkeit von dem Signal des Sensors wird die Kupplung entsprechend elektrisch betätigt.

Durch den Einsatz der oben beschriebenen Kupplung kann der Türinnengriff an einer beliebigen Stelle positioniert werden. Dies ist im Hinblick auf die oben beschriebene, grundsätzlich gewünschte Gestaltungsfreiheit vorteilhaft.

Nachteilig ist bei der bekannten Seitentüranordnung allerdings die Tatsache, daß der Realisierungsaufwand beträchtlich ist. Dies liegt zunächst daran, daß zusätzlich elektrische Komponenten wie ein Aktuator für die Kupplung und ein Sensor für die Ermittlung der Stellung der vorderen Seitentür erforderlich sind. Ferner ist der Montageaufwand durch die notwendige zusätzliche Verkabelung erhöht.

Auch im Hinblick auf die Betriebssicherheit ist die bekannte Seitentüranordnung nicht optimal. Grundsätzlich ist hier eine aufwendige redundante Auslegung erforderlich, um maximalen Ansprüchen zu genügen,

Der vorliegenden Erfindung liegt die Aufgabe zugrunde, die bekannte Seitentüranordnung eines Kraftfahrzeugs derart auszugestalten und weiterzubilden, daß die automatische Deaktivierung des Türgriffs, insbesondere des Türinnengriffs, der hinteren Seitentür bei hoher Betriebssicherheit mit minimalem Aufwand rearlisierbar ist.

Die obige Aufgabe wird bei einer Seitentüranordnung mit den Merkmalen des Oberbegriffs von Anspruch 1 durch die Merkmale des kennzeichnenden Teils von Anspruch 1 gelöst.

Wesentlich ist zunächst die Überlegung, daß die Schließbewegung der vorderen Seitentür dazu genutzt werden kann, den Türgriff, insbesondere den Türinnengriff, der hinteren Seitentür automatisch zu deaktivieren. Hierfür ist ein auslenkbares, mechanisches Übertragungsmittel vorgesehen, das durch die Schließbewegung der vorderen Seitentür ausgelenkt wird und dessen Auslenkung wiederum die Deaktivierung des Türgriffs, insbesondere des Türinnengriffs, der hinteren Seitentür bewirkt.

Durch die Ausgestaltung des Übertragungsmittels als mechanisches Übertragungsmittel kann auf einen Sensor für die Funktion der automatischen Deaktivierung des Türgriffs, insbesondere des Türinnengriffs, der hinteren Seitentür verzichtet werden. Die Schließbewegung der vorderen Seitentür ist in der Regel mit einem Zuschlagen der vorderen Seitentür verbunden, wodurch gewährleistet ist, daß hinreichend Kraft bzw. Drehmoment für die Auslenkung des Übertragungsmittels zur Verfügung steht.

Die vorschlassgemäße Lösung führt zu einer ganz besonders einfachen Konstruktion, da die beiden Stirnseiten der beiden Seitentüren im geschlossenen Zustand ohnehin in unmittelbarer Nähe zueinander angeordnet sind. Dadurch entfallen ungewünscht lange Übertragungswege.

Die bevorzugte Ausgestaltung gemäß Anspruch 4 ist insofern besonders vorteilhaft, als die vordere Seitentür für die Auslenkung des Übertragungsmittels lediglich mit dem Schwenkhebel in Eingriff kommt. Bei geeigneter Auslegung führt dies zu geringen mechanischen Verlusten.

Die bevorzugte Ausgestaltung gemäß Anspruch 6 führt zu einer besonders einfach zu realisierenden Kupplung der Schloßanordnung. Auf eine aufwendige Kinematik kann hier vollständig verzichtet werden.

Nach einer weiteren Lehre, der ebenfalls eigenständige Bedeutung zukommt, wird eine Kraftfahrzeugschloßanordnung für die hintere Seitentür der oben beschriebenen Seitentüranordnung beansprucht. Auf die obigen Ausführungen darf verwiesen werden.

Weitere Vorteile, Merkmale, Eigenschaften und Aspekte der vorliegenden Erfindung ergeben sich aus der folgenden Beschreibung einer bevorzugten Ausführungsform anhand der Zeichnung. Es zeigt
- Fig. 1: eine schematische Darstellung eines Kraftfahrzeugs ohne B-Säule mit einer vorschlagsgemäßen Seitentüranordnung,
- Fig. 2: eine Prinzipdarstellung der Seitentüranordnung des Kraftfahrzeugs gemäß Fig. 1 entlang der Linie II-II bei geschlossenen Seitentüren,
- Fig. 3: die Darstellung gemäß Fig. 2 bei halb geöffneter vorderer Seitentür,
- Fig. 4: die Darstellung gemäß Fig. 3 entlang Ausschnitt IV und
- Fig. 5: die Darstellung gemäß Fig. 3 entlang der Linie V-V.

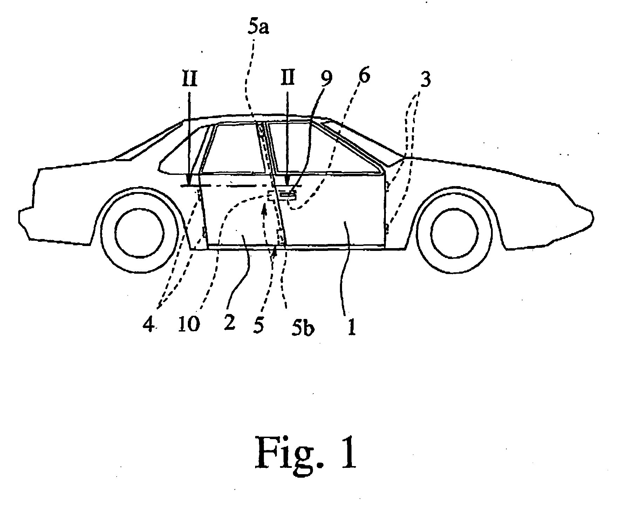

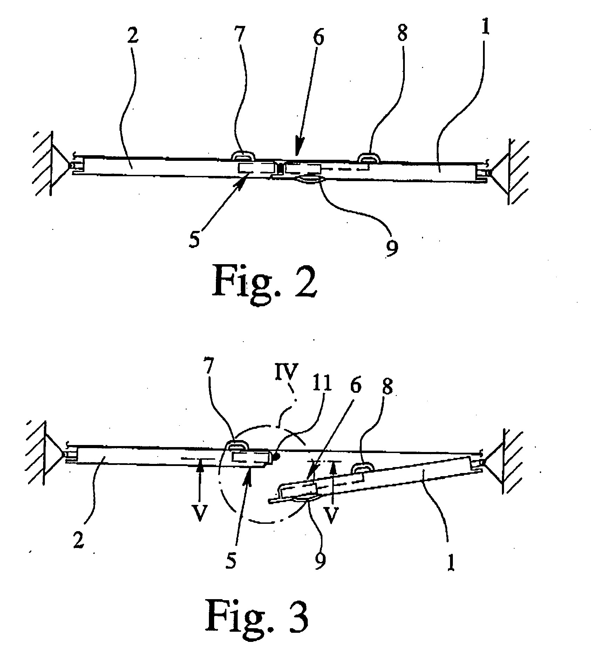

Das in Fig. 1 dargestellte Kraftfahrzeug ist fünftürig ausgestaltet. Es zeigt in Fahrtrichtung gesehen auf jeder Seite eine Seitentüranordnung, die jeweils mit einer vorderen Seitentür 1 und mit einer hinteren Seitentür 2 ausgestattet sind. Die vordere Seitentür 1 ist über ein vorderes Türscharnier 3 an der Kraftfahrzeugkarosserie angelenkt. Die hintere Seitentür 2 ist entsprechend über ein hinteres Türscharnier 4 an der Kraftfahrzeugkarosserie angelenkt. Die Stirnseiten der beiden im geschlossenen Zustand befindlichen Seitentüren 1, 2 sind einander zugewandt, wie der Darstellung in Fig. 2 zu entnehmen ist. Mit "Stirnseite" ist dabei die dem jeweiligen Türscharnier 3, 4 gegenüberliegende Seite der Seitentür 1, 2 gemeint.

Der hinteren Seitentür 2 ist vorliegend eine Schloßanordnung 5 zugeordnet, durch die die im geschlossenen Zustand befindliche hintere Seitentür 2 an der Kraftfahrzeugkarosserie fixierbar ist. Bei der in Fig. 1 dargestellten Ausführungsform weist die Schloßanordnung 5 ein oberes Schloß 5a und ein unteres Schloß 5b auf. Die Schlösser 5a, 5b weisen jeweils vorzugsweise eine Schloßfalle auf, die in Eingriff mit einem korrespondierenden, feststehenden Schließkeil bringbar sind. Insoweit sind die Schlösser in üblicher Weise aufgebaut. Es kann aber auch vorgesehen sein, daß die Schlösser 5a, 5b jeweils einen verstellbaren Verriegelungszapfen aufweisen, die mit einer korrespondierenden Ausnehmung am Dachträger bzw. am Schweller zur Verriegelung in Eingriff bringbar sind. Grundsätzlich kann auch nur eines der beiden Schlösser 5a, 5b vorgesehen sein.

Auch die vordere Seitentür 1 weist eine Schloßanordnung 6 auf, durch die die im geschlossenen Zustand befindliche vordere Seitentür 1 an der hinteren Seitentür 2 fixierbar ist. Die Schloßanordnung 6 der vorderen Seitentür 1 spielt für die vorliegende Erfindung eine nur untergeordnete Rolle, und wird im folgenden nicht näher erläutert.

Durch die oben beschriebene Fixierung der vorderen Seitentür 1 an der hinteren Seitentür 2 sowie der hinteren Seitentür 2 an der Kraftfahrzeugkarosserie kann auf eine B-Säule des Kraftfahrzeugs vollständig verzichtet werden. Es läßt sich Fig. 1 in Zusammenschau mit Fig. 3 entnehmen, daß das dargestellte Kraftfahrzeug keine B-Säule aufweist.

Der hinteren Seitentür 2 ist ein Türgriff 7 zugeordnet, der bei dem dargestellten Ausführungsbeispiel als Türinnengriff ausgeführt ist. Grundsätzlich kann der Türgriff 7 aber auch ein Türaußengriff sein. Weiter kann es vorgesehen sein, daß die erfindungsgemäße Lösung auf den Türinnengriff und gleichzeitig auf den Türaußengriff der hinteren Seitentür 2 Anwendung findet.

Der Vollständigkeit halber darf darauf hingewiesen werden, daß auch die vordere Seitentür 1 einen Türinnengriff 8 sowie einen Türaußengriff 9 aufweist, wobei beide Griffe 8, 9 mit der Schloßanordnung 6 der vorderen Seitentür 1 gekoppelt sind.

Für die vorgeschlagene Lösung ist ausschließlich die Schloßanordnung 5 sowie der Türgriff 7 der hinteren Seitentür 2 von Interesse. Im folgenden wird daher grundsätzlich auf die entsprechenden Komponenten der hinteren Seitentür 2 Bezug genommen.

Der Türgriff 7 der hinteren Seitentür 2 ist mit der Schloßanordnung 5 kuppelbar und damit aktivierbar. Die Schloßanordnung 5 weist hierfür eine betätigbare Kupplung 10 auf. Durch eine Betätigung des aktivierten Türgriffs 7, also bei betätigter Kupplung 10, ist die Fixierung der hinteren Seitentür 2 lösbar.

Die Schloßanordnung 5 der hinteren Seitentür 2 weist ein auslenkbares mechanisches Übertragungsmittel 11 auf, wobei eine Auslenkung des Übertragungsmittels 11 die Deaktivierung des Türgriffs 7 der hinteren Seitentür 2 bewirkt. Der Zusammenhang zwischen der Auslenkung des Übertragungsmittels 11 und der Deaktivierung des Türgriffs 7 wird im folgenden noch näher erläutert.

Es ist Fig. 3 zu entnehmen, daß beim Schließen der vorderen Seitentür 1 bei bereits geschlossener hinterer Seitentür 2 die vordere Seitentür 1 in Eingriff mit dem Übertragungsmittel 11 kommt, das Übertragungsmittel 11 auslenkt und damit die Deaktivierung des Türgriffs 7 der hinteren Seitentür 2 bewirkt. Dadurch ist gewährleistet, daß bei geschlossener vorderer Seitentür 1 eine Öffnung der hinteren Seitentür 2 über den Türgriff 7 der hinteren Seitentür 2 nicht möglich ist.

Es wurde bereits darauf hingewiesen daß der Türgriff 7 der hinteren Seitentür 2 ein Türinnengriff oder ein Türaußengriff sein kann. Anders ausgedrückt, ist jedes Betätigungselement an der hinteren Seitentür 2 in der oben beschriebenen Weise automatisch zu deaktivieren, um die gewünschte Öffnungsreihenfolge gewährleisten zu können.

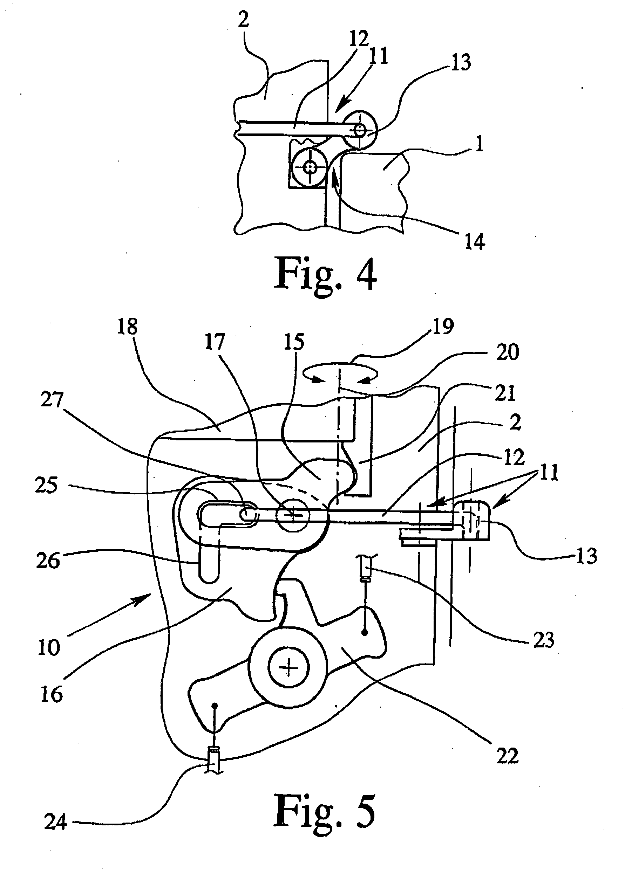

Es läßt sich der Zusammenschau von Fig. 3 und Fig. 4 entnehmen, daß das Übertragungsmittel 11 vorschlagsgemäß an der Stirnseite der hinteren Seitentür 2 derart von außen zugänglich angeordnet ist, daß beim Schließen der vorderen Seitentür 1 bei bereits geschlossener hinterer Seitentür 2 die vordere Seitentür 1 in Eingriff mit dem Übertragungsmittel 11 kommt und den Türgriff 7 der hinteren Seitentür 2 deaktiviert. Der Vorteil dieser Anordnung des Übertragungsmittels 11 wurde weiter oben erläutert.

Es gibt eine Reihe von Möglichkeiten, auf welche Weise die vordere Seitentür 1 in Eingriff mit dem Übertragungsmittel 11 kommen kann. Im dargestellten und insoweit bevorzugten Ausführungsbeispiel kommt die vordere Seitentür 1 mit ihrer Stirnseite in Eingriff mit dem Übertragungsmittel 11. Es kann auch vorgesehen sein, daß die vordere Seitentür 1 mit einem separaten Eingriffsmittel ausgestattet ist, das beispielsweise eine entsprechende Kontur aufweist und vorzugsweise im Bereich der Stirnseite der vorderen Seitentür 1 angeordnet ist.

Auch für das Übertragungsmittel 11 gibt es eine Reihe von Realisierungsmöglichkeiten. Beispielsweise kann das Übertragungsmittel 11 einen Seilzug aufweisen, wodurch sich eine preiswerte und in der Regel geräuscharme Anordnung ergibt.

Eine besonders einfache Konstruktion ergibt sich dadurch, daß das Übertragungsmittel 11 eine Übertragungsstange 12 aufweist, und daß das Übertragungsmittel 11 ferner einen Übertragungshebel 13 aufweist, der an der hinteren Seitentür 2 schwenkbar gelagert ist. Die Übertragungsstange 12 ist dann an den Übertragungshebel 13 angelenkt. Die Anordnung ist nun vorzugsweise so getroffen, daß die Übertragungsstange 12 bei einem Verschwenken des Übertragungshebels 13 eine im wesentlichen lineare Bewegung ausführt. Dies führt zu einem besonders geringen Bauraumbedarf für die jeweilige Auslenkung des Übertragungsmittels 11.

Es ist nun vorzugsweise so, daß jedenfalls der Übertragungshebel 13 des Übertragungsmittels 11 an der Stirnseite der hinteren Seitentür 2 derart von außen zugänglich angeordnet ist, daß beim Schließen der vorderen Seitentür 1 bei bereits geschlossener hinterer Seitentür 2 die vordere Seitentür 1 in Eingriff mit dem Übertragungshebel 13 kommt und im Ergebnis das Übertragungsmittel 11 den Türgriff 7 der hinteren Seitentür 2 deaktiviert. Für den Eingriff mit der vorderen Seitentür 1 weist der Übertragungshebel 13 vorzugsweise eine Führungskante 14 auf. Dies ist in Fig. 4 zu erkennen. Grundsätzlich kann der Übertragungshebel 13 auch mit einer Rolle o. dgl. versehen werden, um Reibungsverluste weitegehend zu vermeiden.

Die Kupplung 10 der Schloßanordnung der hinteren Seitentür 2 weist einen ersten, mit dem Türgriff 7 der hinteren Seitentür 2 gekoppelten Hebel 15 und einen zweiten, mit der Schloßanordnung 5 im übrigen gekoppelten Hebel 16 auf. Beide Hebel 15, 16 sind um die Achse 17 schwenkbar.

Gemäß der Darstellung in Fig. 5 ist der Türgriff 7 der hinteren Seitentür 2 mit einem Griffstück 18 ausgestattet und zur Betätigung in Richtung des Pfeils 19 um die Achse 20 schwenkbar, wobei diese Achse 20 ein Stück in die Zeichenebene hineinversetzt ist. Dadurch bewirkt die Betätigung des Türgriffs 7 eine Verlagerung des mit dem Türgriff 7 gekoppelten Betätigungselements 21 in Fig. 5 im wesentlichen nach links. Dies bewirkt wiederum ein Verschwenken des ersten Hebels 15 linksherum.

Der zweite Hebel 16 ist bei dem dargestellten und insoweit bevorzugten Ausführungsbeispiel mit dem oberen Schloß 5a und dem unteren Schloß 5b gekoppelt. Hierfür ist der zweite Hebel 16 mit einer Wippe 22 in Eingriff bringbar, die wiederum über zwei Bowdenzüge 23, 24 mit den beiden Schlössern 5a, 5b gekoppelt ist. Ein Verschwenken des zweiten Hebels 16 in Fig. 5 linksherum und damit ein Verschwenken der Wippe 22 in Fig. 5 rechtsherum bewirkt im Ergebnis das Lösen der Fixierung der hinteren Seitentür 2.

In besonders bevorzugter Ausgestaltung weisen der erste Hebel 15 und der zweite Hebel 16 jeweils eine Kulisse 25, 26 auf, die sich zumindest teilweise überlappen. Das Übertragungsmittel 11, hier die Übertragungsstange 12, läuft derart in beiden Kulissen 25, 26, daß durch die Auslenkung des Übertragungsmittels 11 eine Aktivierung bzw. Deaktivierung des Türgriffs 7 der hinteren Seitentür 2 bewirkbar ist. Die Übertragungsstange 12 ist an ihrem dem Übertragungshebel 13 abgewandten Ende 27 entsprechend in die Zeichenebene hinein abgewinkelt.

Im einzelnen ist die erste Kulisse 25 im wesentlichen als Langloch ausgeführt. Die zweite Kulisse 26 dagegen zeigt die Form eines Winkels. Bei dem in Fig. 5 dargestellten Zustand ist der Türgriff 7 der hinteren Seitentür 2 aktiviert. Eine Betätigung des Türgriffs 7 bewirkt ein Verschwenken des ersten Hebels 15 linksherum, wodurch ein Drehmoment über die erste Kulisse 25, die Übertragungsstange 12 und die zweite Kulisse 26 auf den zweiten Hebel 16 übertragen wird. Dieser schwenkt entsprechend in Fig. 5 linksherum, wodurch die Wippe 22 rechtsherum schwenkt und das Lösen der Fixierung der hinteren Seitentür 2 über die beiden Bowdenzüge 23, 24 bewirkt.

Wird nun die vordere Seitentür 1 in den geschlossenen Zustand überführt, so wird das Übertragungsmittel 11 ausgelenkt, wobei die Übertragungsstange 12 in Fig. 5 nach links verlagert wird. Eine Betätigung des Türgriffs 7 bewirkt wiederum ein Verschwenken des ersten Hebels 15 in Fig. 5 linksherum. In diesem Fall läuft die Übertragungsstange 12 allerdings in dem in Fig. 5 senkrecht nach unten weisenden Teil der zweiten Kulisse 26. Der Türgriff 7 ist deaktiviert.

Bei dem oben beschriebenen und insoweit bevorzugten Ausführungsbeispiel führt der Türgriff 7 der hinteren Seitentür 2 im deaktivierten Zustand bei seiner Betätigung einen Freilauf aus. Grundsätzlich kann es aber auch vorgesehen sein, daß der Türgriff 7 der hinteren Seitentür 2 im deaktivierten Zustand blockiert ist. Diese Blockierung wird wiederum von der Kupplung 10 vorgenommen. Der Begriff "Kupplung" ist vor diesem Hintergrund in einem erweiterten Sinne zu verstehen.

Besonders vorteilhaft bei der oben beschriebenen Lösung für die automatische Deaktivierung des Türgriffs 7 der hinteren Seitentür 2 ist die Tatsache, daß die Lage des Türgriffs 7 in einem weiten Bereich variiert werden kann. In besonders bevorzugter Ausgestaltung ist der Türgriff 7 der hinteren Seitentür 2 an einer von der Stirnseite der hinteren Seitentür 2 entfernten Stelle angeordnet. Dies hat insbesondere im Hinblick auf einen wirksamen Einklemmschutz Vorteile.

Die vorschlagsgemäße Lösung ist auch hinsichtlich einer möglichen fehlerhaften Bedienung vorteilhaft. Beispielsweise kann die vordere Seitentür 1 ohne weiteres bei gezogenem Türgriff 7 der hinteren Seitentür 2 geschlossen werden, ohne daß sich mechanische Komponenten gegeneinander verklemmen. Ferner ist auch das Öffnen der vorderen Seitentür 1 bei gezogenem Türgriff 7 der hinteren Seitentür 2 weitgehend unproblematisch. Je nach konkreter Ausführungsform ist hier lediglich ein entsprechender Freilauf mit Federvorspannung vorzusehen.

Schließlich darf darauf hingewiesen werden, daß die erfindungsgemäße Lösung nicht auf eine Seitentüranordnung mit ausschließlich mechanischer Betätigung beschränkt ist. Beispielsweise können bei einer derartigen Seitentüranordnung auch Elektroschlösser Anwendung finden, die mit einer mechanischen Redundanz versehen sind. In einem solchen Fall ist der Türgriff 7 der hinteren Seitentür 2 mit einem Schalter o. dgl. versehen, der im Normalfall das motorische Lösen der Fixierung der hinteren Seitentür 2 bewirkt. Entsprechendes gilt für die Schloßanordnung 5 der vorderen Seitentür 1.

Nach einer weiteren Lehre, der eigenständige Bedeutung zukommt, wird eine Kraftfahrzeugschloßanordnung beansprucht, die der oben beschriebenen Schloßanordnung 5 der hinteren Seitentür 2 entspricht. Auf die obigen Ausführungen darf verwiesen werden.

## Patentansprüche

1. Seitentüranordnung eines Kraftfahrzeugs mit einer vorderen Seitentür (1) und einer hinteren Seitentür (2), wobei die vordere Seitentür (1) über ein vorderes Türscharnier (3) an der Kraftfahrzeugkarosserie angelenkt ist, wobei die hintere Seitentür (2) über ein hinteres Türscharnier (4) an der Kraftfahrzeugkarosserie angelenkt ist, wobei die Stirnseiten der beiden im geschlossenen Zustand befindlichen Seitentüren (1, 2) einander zugewandt sind, wobei der hinteren Seitentür (2) eine Schloßanordnung (5) zugeordnet ist, durch die die im geschlossenen Zustand befindliche hintere Seitentür (2) an der Kraftfahrzeugkarosserie fixierbar ist, wobei der hinteren Seitentür (2) ein Türgriff (7) zugeordnet ist, wobei der Türgriff (7) mit der Schloßanordnung (5) kuppelbar und damit aktivierbar ist und die Schloßanordnung (5) hierfür eine betätigbare Kupplung (10) aufweist, wobei durch eine Betätigung des aktivierten Türgriffs (7) die Fixierung der hinteren Seitentür (2) lösbar ist,
**dadurch gekennzeichnet,**
**daß** die Schloßanordnung (5) der hinteren Seitentür (2) ein auslenkbares, mechanisches Übertragungsmittel (11) aufweist, daß eine Auslenkung des Übertragungsmittels (11) die Deaktivierung des Türgriffs (7) der hinteren Seitentür (2) bewirkt und daß das Übertragungsmittel (11) an der Stirnseite der hinteren Seitentür (2) derart von außen zugänglich angeordnet ist, daß beim Schließen der vorderen Seitentür (1) bei bereits geschlossener hinterer Seitentür (2) die vordere Seitentür (1) in Eingriff mit dem Übertragungsmittel (11) kommt, das Übertragungsmittel (11) auslenkt und damit die Deaktivierung des Türgriffs (7) der hinteren Seitentür (2) bewirkt.

2. Seitentüranordnung nach Anspruch 1, **dadurch gekennzeichnet, daß** der Türgriff (7) der hinteren Seitentür (2) ein Türinnengriff oder ein Türaußengriff ist.

3. Seitentüranordnung nach einem der vorhergehenden Ansprüche, **dadurch gekennzeichnet, daß** das Übertragungsmittel (11) einen Seilzug aufweist

4. Seitentüranordnung nach einem der vorhergehenden Ansprüche, **dadurch gekennzeichnet, daß** das Übertragungsmittel (11) eine Übertragungsstange (12) aufweist, vorzugsweise, daß das Übertragungsmittel (11) ferner einen Übertragungshebel (13) aufweist, der an der hinteren Seitentür (2) schwenkbar gelagert ist und an dem die Übertragungsstange (12) angelenkt ist, vorzugsweise, daß die Übertragungsstange (12) bei einem Verschwenken des Übertragungshebels (13) eine im wesentlichen lineare Bewegung ausführt.

5. Seitentüranordnung nach Anspruch 4, **dadurch gekennzeichnet, daß** jedenfalls der Übertragungshebel (13) des Übertragungsmittels (11) an der Stirnseite der hinteren Seitentür (2) derart von außen zugänglich angeordnet ist, daß beim Schließen der vorderen Seitentür (1) bei bereits geschlossener hinterer Seitentür (2) die vordere Seitentür (1) in Eingriff mit dem Übertragungshebel (13) kommt und das Übertragungsmittel (11) den Türgriff (7) der hinteren Seitentür (2) deaktiviert, vorzugsweise, daß der Übertragungshebel (13) für den Eingriff mit der vorderen Seitentür (1) eine Führungskante (14) aufweist.

6. Seitentüranordnung nach einem der vorhergehenden Ansprüche, **dadurch gekennzeichnet, daß** die Kupplung (10) der Schloßanordnung (5) der hinteren Seitentür (2) einen ersten, mit dem Türgriff (7) der hinteren Seitentür (2) gekoppelten Hebel (15) und einen zweiten, mit der Schloßanordnung (5) im übrigen, insbesondere mit einem Schloß (5a, 5b) der Schloßanordnung (5), gekoppelten Hebel (16) aufweist, vorzugsweise, daß der erste Hebel (15) und der zweite Hebel (16) jeweils eine Kulisse (25, 26) aufweisen, daß sich die beiden Kulissen (25, 26) zumindest teilweise überlappen und daß das Übertragungsmittel (11) derart in beiden Kulissen (25, 26) läuft, daß durch die Auslenkung des Übertragungsmittels (11) eine Aktivierung bzw. Deaktivierung des Türgriffs (7) der hinteren Seitentür (2) bewirkbar ist.

7. Seitentüranordnung nach einem der vorhergehenden Ansprüche, **dadurch gekennzeichnet, daß** der Türgriff (7) der hinteren Seitentür (2) im deaktivierten Zustand bei seiner Betätigung einen Freilauf ausführt.

8. Seitentüranordnung nach einem der Ansprüche 1 bis 6, **dadurch gekennzeichnet, daß** der Türgriff (7) der hinteren Seitentür (2) im deaktivierten Zustand blockiert ist.

9. Seitentüranordnung nach einem der vorhergehenden Ansprüche, **dadurch gekennzeichnet, daß** der Türgriff (7) der hinteren Seitentür (2) an einer von der Stirnseite der hinteren Seitentür (2) entfernten Stelle angeordnet ist.

10. Kraftfahrzeugschloßanordnung für die hintere Seitentür (2) einer Seitentüranordnung, die neben der hinteren Seitentür (2) eine vordere Seitentür (1) aufweist, wobei die vordere Seitentür (1) über ein vorderes Türscharnier (3) an der Kraftfahrzeugkarosserie angelenkt ist, wobei die hintere Seitentür (2) über ein hinteres Türscharnier (4) an der Kraftfahrzeugkarosserie angelenkt ist, wobei die Stirnseiten der beiden im geschlossenen Zustand befindlichen Seitentüren (1, 2) einander zugewandt sind, wobei durch die Schloßanordnung (5) die im geschlossenen Zustand befindliche hintere Seitentür (2) an der Kraftfahrzeugkarosserie fixierbar ist, wobei der hinteren Seitentür (2) ein Türgriff (7) zugeordnet ist, wobei der Türgriff (7) mit der Schloßanordnung (5) kuppelbar und damit aktivierbar ist und die Schloßanordnung (5) hierfür eine betätigbare Kupplung (10) aufweist, wobei durch eine Betätigung des aktivierten Türgriffs (7) die Fixierung der hinteren Seitentür (2) lösbar ist,
**dadurch gekennzeichnet,**
**daß** die Schloßanordnung (5) der hinteren Seitentür (2) ein auslenkbares, mechanisches Übertragungsmittel (11) aufweist, daß eine Auslenkung des Übertragungsmittels (11) die Deaktivierung des Türgriffs (7) der hinteren Seitentür (2) bewirkt und daß das Übertragungsmittel (11) an der Stirnseite der hinteren Seitentür (2) derart von außen zugänglich angeordnet ist, daß beim Schließen der vorderen Seitentür (1) bei bereits geschlossener hinterer Seitentür (2) die vordere Seitentür (1) in Eingriff mit dem Übertragungsmittel (11) kommt, das Übertragungsmittel (11) auslenkt und damit die Deaktivierung des Türgriffs (7) der hinteren Seitentür (2) bewirkt.

11. Schloßanordnung nach Anspruch 10, gekennzeichet durch die Merkmale des kennzeichnenden Teils eines oder mehrerer der Ansprüche 1 bis 8.

## Claims

1. Motor vehicle side door arrangement, having a front side door (1) and a rear side door (2), wherein the front side door (1) is articulated on the motor vehicle body via a front door hinge (3), wherein the rear side door (2) is articulated on the motor vehicle body via a rear door hinge (4), wherein the end faces of the two side doors (1, 2) in the closed state face one another, wherein the rear side door (2) is assigned a lock arrangement (5), by means of which the rear side door (2) in the closed state can be fixed on the motor vehicle body, wherein the rear side door (2) is assigned a door handle (7), wherein the door handle (7) can be coupled to the lock arrangement (5) and can be activated therewith and for this purpose the lock arrangement (5) has an actuable coupling (10), wherein, by actuating the activated door handle (7), the fixing of the rear side door (2) can be released,
**characterized**
**in that** the lock arrangement (5) of the rear side door (2) has a deflectable, mechanical transmission means (11), in that a deflection of the transmission means (11) deactivates the door handle (7) of the rear side door (2) and in that the transmission means (11) is arranged in an externally accessible manner on the end face of the rear side door (2) such that, when the front side door (1) is closed with the rear side door (2) already closed, the front side door (1) engages with the transmission means (11), the transmission means (11) deflects and thereby deactivates the door handle (7) of the rear side door (2).

2. Side door arrangement according to Claim 1, **characterized in that** the door handle (7) of the rear side door (2) is an inside door handle or an outside door handle.

3. Side door arrangement according to one of the preceding claims, **characterized in that** the transmission means (11) has a cable pull.

4. Side door arrangement according to one of the preceding claims, **characterized in that** the transmission means (11) has a transmission rod (12), preferably **in that** the transmission means (11) further has a transmission lever (13), which is mounted pivotably on the rear side door (2) and is articulated on the transmission rod (12), preferably **in that** the transmission rod (12) moves substantially linearly when the transmission lever (13) is pivoted.

5. Side door arrangement according to Claim 4, **characterized in that** in any case the transmission lever (13) of the transmission means (11) is arranged in an externally accessible manner on the end face of the rear side door (2) such that, when the front side door (1) is closed with the rear side door (2) already closed, the front side door (1) engages with the transmission lever (13) and the transmission means (11) deactivates the door handle (7) of the rear side door (2), preferably **in that** the transmission lever (13) has a guide edge (14) for engaging with the front side door (1).

6. Side door arrangement according to one of the preceding claims, **characterized in that** the coupling (10) of the lock arrangement (5) of the rear side door (2) has a first lever (15) coupled to the door handle (7) of the rear side door (2) and a second lever (16) furthermore coupled to the lock arrangement (5), in particular to a lock (5a, 5b) of the lock arrangement (5), preferably **in that** the first lever (15) and the second lever (16) in each case have a guide element (25, 26), **in that** the two guide elements (25, 26) at least partially overlap and **in that** the transmission means (11) runs in the two guide elements (25, 26) such that, by deflecting the transmission means (11), the door handle (7) of the rear side door (2) can be activated or deactivated.

7. Side door arrangement according to one of the preceding claims, **characterized in that** the door handle (7) of the rear side door (2) freewheels when it is actuated in the deactivated state.

8. Side door arrangement according to one of Claims 1 to 6, **characterized in that** the door handle (7) of the rear side door (2) is blocked in the deactivated state.

9. Side door arrangement according to one of the preceding claims, **characterized in that** the door handle (7) of the rear side door (2) is arranged at a point remote from the end face of the rear side door (2).

10. Motor vehicle lock arrangement for the rear side door (2) of a side door arrangement which has a front side door (1) in addition to the rear side door (2), wherein the front side door (1) is articulated on the motor vehicle body via a front door hinge (3), wherein the rear side door (2) is articulated on the motor vehicle body via a rear door hinge (4), wherein the end faces of the two side doors (1, 2) in the closed state face one another, wherein by means of the lock arrangement (5) the rear side door (2) in the closed state can be fixed on the motor vehicle body, wherein the rear side door (2) is assigned a door handle (7), wherein the door handle (7) can be coupled to the lock arrangement (5) and can be activated therewith and for this purpose the lock arrangement (5) has an actuable coupling (10), wherein, by actuating the activated door handle (7), the fixing of the rear side door (2) can be released,
**characterized**
**in that** the lock arrangement (5) of the rear side door (2) has a deflectable, mechanical transmission means (11), in that a deflection of the transmission means (11) deactivates the door handle (7) of the rear side door (2) and in that the transmission means (11) is arranged in an externally accessible manner on the end face of the rear side door (2) such that, when the front side door (1) is closed with the rear side door (2) already closed, the front side door (1) engages with the transmission means (11), the transmission means (11) deflects and thereby deactivates the door handle (7) of the rear side door (2).

11. Lock arrangement according to Claim 10, **characterized by** the features of the characterizing part of one or more of Claims 1 to 8.

## Revendications

1. Agencement de porte latérale pour un véhicule automobile, comprenant une porte latérale avant (1) et une porte latérale arrière (2), la porte latérale avant (1) étant articulée à la carrosserie du véhicule automobile par le biais d'une charnière de porte avant (3), la porte latérale arrière (2) étant articulée à la carrosserie du véhicule automobile par le biais d'une charnière de porte arrière (4), les côtés frontaux des deux portes latérales (1, 2) se trouvant dans l'état fermé étant tournés l'un vers l'autre, la porte latérale arrière (2) étant associée à un agencement de serrure (5), qui permet de fixer la porte latérale arrière (2) se trouvant dans l'état fermé à la carrosserie du véhicule automobile, la porte latérale arrière (2) étant associée à une poignée de porte (7), la poignée de porte (7) pouvant être accouplée à l'agencement de serrure (5) et donc activée, et l'agencement de serrure (5) présentant à cet effet un accouplement actionnable (10), la fixation de la porte latérale arrière (2) pouvant être desserrée par un actionnement de la poignée de porte activée (7),
**caractérisé en ce que**
l'agencement de serrure (5) de la porte latérale arrière (2) présente un moyen de transfert mécanique (11) pouvant être dévié, **en ce qu'**une déviation du moyen de transfert (11) provoque la désactivation de la poignée de porte (7) de la porte latérale arrière (2) et **en ce que** le moyen de transfert (11) est disposé de manière accessible de l'extérieur sur le côté frontal de la porte latérale arrière (2) de telle sorte que lors de la fermeture de la porte latérale avant (1), lorsque la porte latérale arrière (2) est déjà fermée, la porte latérale avant (1) vienne en prise avec le moyen de transfert (11), dévie le moyen de transfert (11) et donc provoque la désactivation de la poignée de porte (7) de la porte latérale arrière (2).

2. Agencement de porte latérale selon la revendication 1, **caractérisé en ce que** la poignée de porte (7) de la porte latérale arrière (2) est une poignée intérieure de porte ou une poignée extérieure de porte.

3. Agencement de porte latérale selon l'une quelconque des revendications précédentes, **caractérisé en ce que** le moyen de transfert (11) présente un câble Bowden.

4. Agencement de porte latérale selon l'une quelconque des revendications précédentes, **caractérisé en ce que** le moyen de transfert (11) présente une tige de transfert (12), de préférence, **en ce que** le moyen de transfert (11) présente en outre un levier de transfert (13), qui est monté de manière pivotante sur la porte latérale arrière (2), et qui est articulé à la tige de transfert (12), de préférence **en ce que** la tige de transfert (12) effectue un mouvement essentiellement linéaire lors d'un pivotement du levier de transfert (13).

5. Agencement de porte latérale selon la revendication 4, **caractérisé en ce que** le levier de transfert (13) du moyen de transfert (11) est disposé dans chaque cas de manière accessible depuis l'extérieur sur le côté frontal de la porte latérale arrière (2) de telle sorte que lors de la fermeture de la porte latérale avant (1), lorsque la porte latérale arrière (2) est déjà fermée, la porte latérale avant (1) vienne en prise avec le levier de transfert (13) et que le moyen de transfert (11) désactive la poignée de porte (7) de la porte latérale arrière (2), de préférence, **en ce que** le levier de transfert (13) présente une arête de guidage (14) pour l'engagement avec la porte latérale avant (1).

6. Agencement de porte latérale selon l'une quelconque des revendications précédentes, **caractérisé en ce que** l'accouplement (10) de l'agencement de serrure (5) de la porte latérale arrière (2) présente un premier levier (15) accouplé à la poignée de porte (7) de la porte latérale arrière (2) et un deuxième levier (16) accouplé du reste à l'agencement de serrure (5), notamment à une serrure (5a, 5b) de l'agencement de serrure (5), de préférence **en ce que** le premier levier (15) et le deuxième levier (16) présentent chacun une coulisse (25, 26), **en ce que** les deux coulisses (25, 26) se chevauchent au moins en partie et **en ce que** le moyen de transfert (11) roule dans les deux coulisses (25, 26) de telle sorte qu'une activation ou une désactivation de la poignée de porte (7) de la porte latérale arrière (2) puisse être produite par la déviation du moyen de transfert (11).

7. Agencement de porte latérale selon l'une quelconque des revendications précédentes, **caractérisé en ce que** la poignée de porte (7) de la porte latérale arrière (2) effectue une course à vide lors de son actionnement dans l'état désactivé.

8. Agencement de porte latérale selon l'une quelconque des revendications 1 à 6, **caractérisé en ce que**: la poignée de porte (7) de la porte latérale arrière (2) est bloquée dans l'état désactivé.

9. Agencement de porte latérale selon l'une quelconque des revendications précédentes, **caractérisé en ce que** la poignée de porte (7) de la porte latérale arrière (2) est disposée en un point éloigné du côté frontal de la porte latérale arrière (2).

10. Agencement de serrure de véhicule automobile pour la porte latérale arrière (2) d'un agencement de porte latérale, qui présente, en plus de la porte latérale arrière (2), une porte latérale avant (1), la porte latérale avant (1) étant articulée à la carrosserie du véhicule automobile par le biais d'une charnière de porte avant (3), la porte latérale arrière (2) étant articulée à la carrosserie du véhicule automobile par le biais d'une charnière de porte arrière (4), les côtés frontaux des deux portes latérales (1, 2) se trouvant dans l'état fermé étant tournés l'un vers l'autre, la porte latérale arrière (2) se trouvant dans l'état fermé pouvant être fixée à la carrosserie du véhicule automobile par l'agencement de serrure (5), la porte latérale arrière (2) étant associée à une poignée de porte (7), la poignée de porte (7) pouvant être accouplée à l'agencement de serrure (5) et donc activée, et l'agencement de serrure (5) présentant à cet effet un accouplement actionnable (10), la fixation de la porte latérale arrière (2) pouvant être desserrée par un actionnement de la poignée de porte activée (7),
**caractérisé en ce que**
l'agencement de serrure (5) de la porte latérale arrière (2) présente un moyen de transfert mécanique (11) pouvant être dévié, **en ce qu'**une déviation du moyen de transfert (11) provoque la désactivation de la poignée de porte (7) de la porte latérale arrière (2) et **en ce que** le moyen de transfert (11) est disposé de manière accessible de l'extérieur sur le côté frontal de la porte latérale arrière (2) de telle sorte que lors de la fermeture de la porte latérale avant (1), lorsque la porte latérale arrière (2) est déjà fermée, la porte latérale avant (1) vienne en prise avec le moyen de transfert (11), dévie le moyen de transfert (11) et donc provoque la désactivation de la poignée de porte (7) de la porte latérale arrière (2).

11. Agencement de serrure selon la revendication 10, **caractérisé par** les caractéristiques de la partie caractérisante d'une ou plusieurs des revendications 1 à 8.
